# EUROPÄISCHE PATENTSCHRIFT

(11) **EP 1 095 715 B1**
(45) Veröffentlichungstag und Bekanntmachung des Hinweises auf die Patenterteilung: **07.04.2004**
(21) Anmeldenummer: 00122306.4
(22) Anmeldetag: 20.10.2000
(51) Int. Cl.: B08B 15/00, F16L 41/00, B23Q 11/00, B23D 59/00

(54) **Absaugvorrichtung**
Suction device
Système d'aspiration

(30) Priorität: 26.10.1999 DE 29918795 U
(43) Veröffentlichungstag der Anmeldung: 02.05.2001
(73) Patentinhaber: HOMAG MASCHINENBAU AG, D-72296 Schopfloch (DE)
(72) Erfinder: Amos, Hartmut, 72108 Rottenburg (DE); Gringel, Martin, 72379 Hechingen (DE)
(74) Vertreter: HOFFMANN - EITLE

(56) Entgegenhaltungen:
- DD-A- 142 521
- DE-A- 2 063 757
- US-A- 4 173 176

## Beschreibung

### Technisches Gebiet

Die Erfindung betrifft eine Absaugvorrichtung zum Absaugen von Bearbeitungsrückständen, die bei der spanenden Bearbeitung von Werkstücken aus Holz, holzähnlichen Werkstoffen, Holzersatzstoffen oder Kunststoffen anfallen.

In Bearbeitungsmaschinen, wie beispielsweise Bearbeitungszentren oder Portalmaschinen, die zur stationären Bearbeitung von auf einem Tisch aufgespannten Werkstücken eingesetzt werden, fallen während des Betriebs große Mengen an Spänen an, die fortlaufend aus dem Bearbeitungsbereich abgesaugt werden müssen, damit es nicht zu einer Beeinträchtigung der Verfahrmöglichkeiten der Bearbeitungswerkzeuge und unter Umständen zu einem Spänestau im Bearbeitungsraum kommt, der wiederum zu Schäden an der Maschine oder dem Spanwerkzeug führen kann.

### Stand der Technik

Im Stand der Technik sind verschiedenste Absaugvorrichtungen bekannt, die an Bearbeitungsmaschinen der zuvor erläuterten Art eingesetzt werden. Oftmals sind Bearbeitungsmaschinen auch mit mehreren spanenden Aggregaten ausgestattet, die gleichzeitig zum Einsatz kommen, so dass auch an unterschiedlichen Stellen Späne anfallen, die mit Hilfe von mehreren Absaugeinrichtungen abgeführt werden müssen, um eine optimale Spanbeseitigung gewährleisten zu können. Bei derartigen Maschinen ist es vorteilhaft, wenn möglichst alle vorhandenen Absaugeinrichtungen mit einer einzigen Saugquelle verbunden sind, damit der gerätetechnische Aufwand und damit die Herstellungs- und auch Betriebskosten möglichst gering gehalten werden können.

Es sind bereits verschiebbare Abdeckhauben oder Laufwagen entwickelt worden, die mit einer Saugquelle verbunden sind und den Anschluss einer Absaugeinrichtung erlauben. Beim gleichzeitigen Einsatz mehrerer derartiger Laufwagen tritt allerdings das Problem auf, dass es aufgrund der hohen Verfahrgeschwindigkeiten, die bei der Bearbeitung von Werkstücken auftreten können, zu Schlauchkollisionen der einzelnen Laufwagen kommt.

So ist aus der DE 81 34 874 U1 eine Absaugvorrichtung mit einer Haube bekannt, die längs eines Saugkanals verfahrbar ist. In der Haube ist eine Ansaugöffnung ausgebildet, die mit einem Schlauchanschluss verbindbar ist. Der Saugkanal wird durch ein bereichsweise verformbares Dichtglied in Form eines Bandes abgedichtet, wobei das Band innerhalb der Haube vom Saugkanal abgehoben ist, um die Ansaugöffnung mit dem Saugkanal in Strömungsverbindung zu setzen. Das Band wird durch Rollen an den Stirnseiten der Haube abdichtend niedergehalten und über weitere Rollen oberhalb der Ansaugöffnung umgelenkt. Diese bekannte verschiebbare Abdeckhaube ist mit dem Nachteil behaftet, dass die gesamte Haube mit dem im darunterliegenden Kanal herrschenden Druck beaufschlagt wird. Das heißt, der gesamte Haubeninnenraum ist bei einer Anmeldung als Absaugvorrichtung mit einem Unterdruck beaufschlagt. Dies führt zu Dichtungsproblemen und stellt besondere Festigkeitsanforderungen an die Haubenstruktur. Darüber hinaus ist das bekannte Abdichtband aus den vorgenannten Gründen mit Querverstrebungen versehen, die aber bei der Bandumlenkung Probleme bereiten. Außerdem ist hier nur ein Anschluss für eine Absaugeinrichtung vorgesehen, so dass es auch hier zu Schlauchkollisionen kommen kann, wenn mehrere derartige Vorrichtungen gleichzeitig eingesetzt werden.

Ergänzend sei noch auf folgenden Stand der Technik hingewiesen. Aus der DE 79 23 659 U1 ist eine Absaugvorrichtung für Holzbearbeitungsmaschinen mit einem Absaugrohr mit offenem Querschnitt bekannt. An der offenen Seitenfläche des Absaugrohres sind zwei sich berührende Dichtlippen aus elastischem Kunststoff angeordnet. Zwischen die Dichtlippen greift längs des Absaugrohres ein verschiebbarer und mit dem Absauggebläse verbundener Gleitstutzen ein. An dem Gleitstutzen sind Rollen gelagert, die die Außenwand des Gleitstutzens überragen. Diese Absaugvorrichtung ist insbesondere für Plattensägen bestimmt.

Eine Plattensäge mit Abdeckhaube und einer Absaugeinrichtung ist aus der DE 43 25 466 C2 bekannt. Die Abdeckhaube wird hier synchron zu zumindest den horizontalen Bewegungen eines Sägeaggregates geführt, wobei beim Sägen entstehende Späne und Staub hinter dem Werkstück erfasst und in einen im wesentlichen horizontalen Absaugkanal geführt werden.

Allgemein sind Rolloabdeckungen zum Schutz von Führungsbahnen bekannt, beispielsweise aus der DE 82 13 346 C1. Es ist hier herausgestellt, dass die Rolloabdeckung für beliebig lange Verfahrwege bestimmt ist, bei der das Abdeckband mit einer annähernd konstanten und frei bestimmbaren Kraft straffgezogen wird.

Die US 4,173,176 betrifft eine Absaugvorrichtung für Werkzeugmaschinen. Ein Saugkanal ist dabei mit einer Saugquelle verbindbar. Eine Kanalöffnung ist durch ein Abdeckband verschlossen. Zwischen das Abdeckband und die Kanalöffnung kann eine Struktur eingebracht werden, die einen Boden aufweist, in dem ein Öffnungsschlitz vorgesehen ist. Diese Struktur ist mittels der Öffnung an einen Sauganschluss anschließbar. Es sind Umlenkrollen daran befestigt, die das Abdeckband von der Kanalöffnung anheben. Die Struktur ist mittels Gleitschuhen verfahrbar. Die US 4,173,176 bildet den Oberbegriff von Anspruch 1.

### Darstellung der Erfindung

Das der Erfindung zugrunde liegende technische Problem besteht darin, eine Absaugvorrichtung bereitzustellen, die längs eines mit einer Saugquelle verbindbaren Saugkanals verschiebbar ist, aber in Hinblick auf den im Saugkanal herrschenden Druck keine speziellen Anforderungen an die Strukturfestigkeit erforderlich macht.

Dieses technische Problem wird durch eine Absaugvorrichtung mit den Merkmalen des Anspruchs 1 gelöst. Eine solche Absaugvorrichtung weist einen Saugkanal auf, der mit einer Saugquelle verbindbar ist und zumindest eine Kanalöffnung besitzt, die durch ein flexibles Abdeckband verschlossen ist. Die Kanalöffnung ist normalerweise länglich ausgebildet, kann aber auch aus einer Vielzahl von separaten, beliebig angeordneten und geformten Öffnungen gebildet sein. Es ist darüber hinaus eine Abdeckhaube vorhanden, die auf dem Saugkanal entlang der Zugangsöffnung verschiebbar ist. Die Abdeckhaube besitzt zumindest einen Sauganschluss, an den eine Absaugvorrichtung anschließbar ist und der über eine Absaugluftführung mit dem Saugkanal in Strömungsverbindung steht. Ein die Zugangsöffnung in der Abdeckhaube abdichtendes Bodenelement weist zumindest eine mit dem Saugkanal in Strömungsverbindung stehende Zugangsöffnung auf. Im Bereich des Bodenelementes sind zumindest zwei voneinander beabstandete Umlenkeinrichtungen vorhanden. Mit diesen Umlenkeinrichtungen wird das Abdeckband innerhalb der Abdeckhaube von der Zugangsöffnung abgehoben und über die eine oder mehreren Zugangsöffnungen geführt. Die zumindest eine Zugangsöffnung in dem Bodenelement ist über eine Absaugluftführung mit dem Sauganschluss verbunden. Bei mehreren Einlassöffnungen sind entsprechend mehrere Absaugluftführungen vorhanden. Schließlich sind Dichtungseinrichtungen vorgesehen, die den jeweils zwischen den Umlenkeinrichtungen und dem Bodenblech, insbesondere dessen Stirnseiten, gebildeten Spalt zur Durchführung des Abdeckbandes abdichten.

Der Erfindung liegt der Gedanke zugrunde, in der Abdeckhaube ein Bodenelement vorzusehen, so dass nur noch die zumindest eine Absaugluftführung mit dem durch das Bodenelement und das Abdeckband abgeschlossenen Absaugkanal in Strömungsverbindung steht. Damit wird die Abdeckhaube von dem im Absaugkanal herrschenden Druck abgetrennt, entgegengesetzt zu dem im Stand der Technik vorliegenden Fall, was im Hinblick auf die notwendige Strukturfestigkeit der Abdeckhaube von Vorteil ist und insbesondere auch abdichtungstechnisch Vorteile mit sich bringt. Da die Abdichtung des Abdeckbandes durch die erfindungsgemäße neue Gestaltung der Abdeckhaube nur noch über der Dicke und der Breite des Bandes entsprechende Schlitze anzubringen ist, ist die Abdichtung des Abdeckbandes weitaus problemloser als beim Stand der Technik. Dabei wird vorteilhafterweise das Bodenelement selbst randseitig mit dem Saugkanal durch eine Labyrinthdichtung abgedichtet.

Eine vorteilhafte Ausführungsform sieht vor, dass sich die Umlenkeinrichtungen in etwa über die Breite des Abdeckbandes erstrecken. Dadurch wird selbst bei schnellen Verfahrgeschwindigkeiten eine einwandfreie Separierung von dem Absaugkanal wie auch eine gute Bandführung gewährleistet. Insbesondere ist es vorteilhaft, wenn als Umlenkeinrichtungen Rollen vorgesehen sind, wodurch die auftretende Reibung weiter verringert werden kann, was für die Beweglichkeit und die möglichen Verfahrgeschwindigkeiten der Abdeckhaube Vorteile mit sich bringt. Selbstverständlich ist es aber auch möglich, anstatt Rollen feststehende Gleitelemente oder andere Einrichtungen vorzusehen, die einen geeigneten Querschnitt haben und vorteilhafterweise zur weiteren Verringerung der auftretenden Reibung speziell beschichtet sind, beispielsweise mit Teflon.

Eine Absaugeinrichtung der erfindungsgemäßen Art ist insbesondere dann vorteilhaft, wenn sie an einem Auslegerarm oder einem Portäl einer Bearbeitungsmaschine angeordnet ist. Dabei ist es vorteilhaft, wenn der Saugkanal sich längs des Portals oder des Auslegers erstreckt.

Um eine eigene Antriebseinrichtung für die Abdeckhaube und der hiermit verbundenen Einrichtungen einzusparen, ist es zweckmäßig, die Abdeckhaube mit dem Bearbeitungsaggregat zu koppeln, so dass durch Verfahren des Bearbeitungsaggregates mit Hilfe einer Verfahreinrichtung sich die Abdeckhaube entlang des Saugkanals mitbewegt. Dazu ist es ebenfalls vorteilhaft, wenn durch die gewählte Anordnung die Reibung vermindert ist, so dass die Abdeckhaube synchron den schnellen Verfahrbewegungen des Bearbeitungsaggregates folgen kann.

Insbesondere ist eine Ausbildung der vorgenannten Art vorteilhaft, wenn es sich bei der Verfahreinrichtung um einen Kreuzschlitten der Bearbeitungsmaschine handelt, der beim Verfahren eines hieran angeordneten Bearbeitungsaggregates die Abdeckhaube mitbewegt.

Als äußerst vorteilhaft hinsichtlich der Abdeckung hat es sich herausgestellt, als Dichteinrichtungen Dichtungskeile vorzusehen. Durch Anordnen der Dichtungskeile ist in Kombination mit den Umlenkeinrichtungen eine einwandfreie Umlenkung und Abhebung von dem Saugkanal gewährleistet. Dichtungskeile können verschiedentlich ausgebildet sein, solange in Kombination mit der jeweils zugehörigen Umlenkeinrichtung ein ausreichende Dichtheit erzielt wird. Beispielsweise sind hierzu dienlich: Kunststoff- oder Metallleisten mit im Querschnitt im wesentlichen dreieckiger Form bzw. einer Form, die zu der zugehörigen Umlenkrolle komplementär ist. Wesentlich ist aber die Ausbildung der Gleitfläche, die dem Abdeckband zugewandt ist. Hierfür sind verschiedenste Ausgestaltungen denkbar.

Erfindungsgemäß ist es also auch erstmals möglich, ein luftdichtes Abdeckband, das flexibel ist, einzusetzen, welches keine Querverstrebungen, wie beim Stand der Technik, zur Stabilisierung benötigt.

### Kurze Beschreibung der Zeichnungen

Im folgenden sind zur weiteren Erläuterung und zum besseren Verständnis mehrere Ausführungsformen der Erfindung unter Bezugnahme auf die beigefügten Zeichnungen näher beschrieben und erläutert. Es zeigt:
- Fig. 1: einen schematischen Längsschnitt durch eine erfindungsgemäße Absaugvorrichtung,
- Fig. 2: eine schematische Perspektivansicht auf eine Absaugvorrichtung gemäß der Fig. 1, wobei die Abdeckhaube nicht dargestellt ist,
- Fig. 3: eine Querschnittsansicht einer weiteren Ausführungsform einer erfindungsgemäßen Absaugvorrichtung entlang der Linie A-D in Fig. 4, und
- Fig. 4: eine schematische Seitenansicht einer Absaugvorrichtung gemäß der Fig. 3, die an einem Portal einer Bearbeitungsmaschine angebracht ist.

### Detaillierte Beschreibung der Ausführungsbeispiele

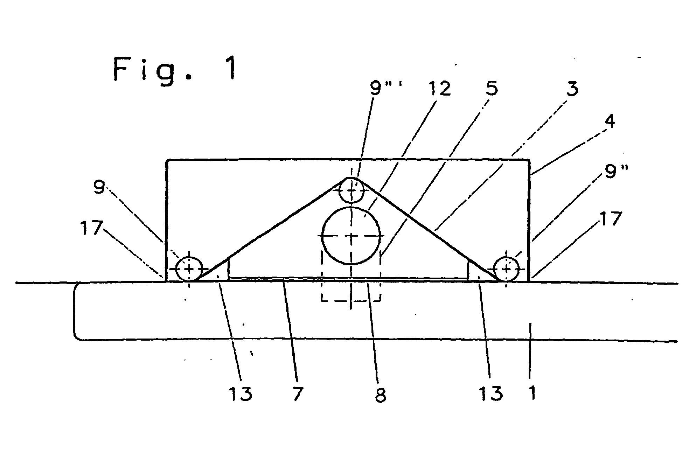

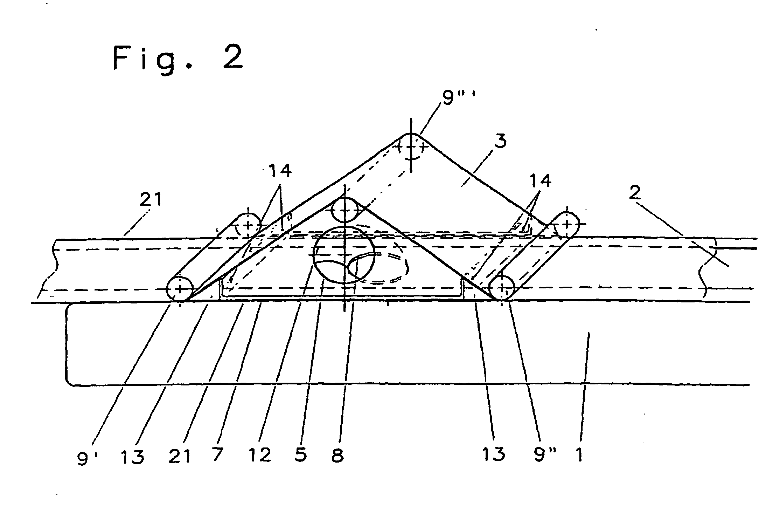

Die erfindungsgemäße Absaugvorrichtung gemäß den Fig. 1 und 2 umfasst einen in einem Portal längsverlaufenden Saugkanal 1, der mit einer hier nicht dargestellten Saugquelle verbindbar ist. Der Saugkanal 1 ist im Querschnitt gesehen im wesentlichen U-förmig. Durch diese U-Form wird eine längsverlaufende Kanalöffnung 2 geschaffen, die durch ein flexibles Abdeckband 3 verschlossen ist. Eine Abdeckhaube 4 mit stirnseitig vorhandenen Durchlassspalten 17 für das Abdeckband 3 ist auf dem Portal oberhalb des Saugkanals 1 angeordnet und durch nicht dargestellte Lagermittel geführt.

Die Abdeckhaube 4 ist auf ihrer dem Saugkanal 1 zugewandten Bodenseite mit einem Bodenblech 7 verschlossen. Das Bodenblech 7 weist bei der in den Fig. 1 und 2 gezeigten Ausführungsform eine Zugangsöffnung 8 auf, die mit dem Saugkanal 1 in Strömungsverbindung steht. Auf die Zugangsöffnung 8 ist ein Stutzen 5 aufgesetzt, der an einer Seitenwand der Abdeckhaube 4 in einer Anschlussöffnung 12 endet. An diesem Stutzen 5 ist eine Absaugeinrichtung anschließbar, beispielsweise ein Schlauch, der zu der abzusaugenden Stelle in der Bearbeitungsmaschine führt. An den Randseiten des Bodenblechs 7 sind einander gegenüberliegend Dichtungskeile 13 vorhanden, die jeweils in Kombination mit einer Umlenkrolle 9' bzw. 9'' einen Durchgangsspalt 17 für das Abdeckband 3 bilden. Wie aus der Fig. 2 ersichtlich ist, ist ein Keil 13 jeweils durch Schraubverbindungen 14 an Abkantungen des Bodenblechs 7 befestigt. Eine dritte Umlenkrolle 9''' ist in der Abdeckhaube 4 oberhalb der bodenseitigen Umlenkrolle 9', 9'' angeordnet. Über diese drei Umlenkrollen 9', 9'' und 9''' wird das Abdeckband 3, das den Saugkanal 1 oberseitig dicht abschließt, von dem Saugkanal 1 abgehoben.

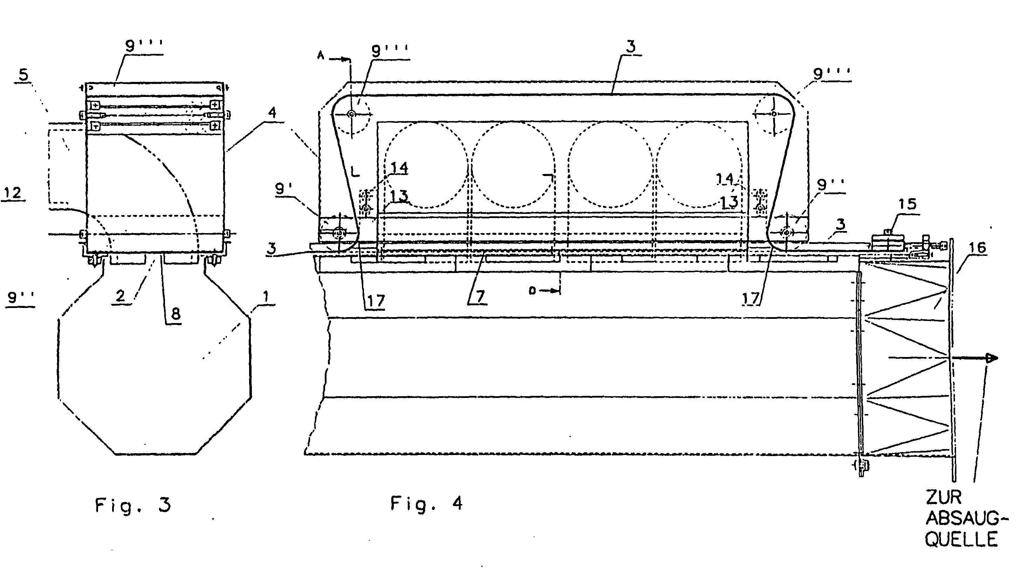

Die in den Fig. 3 und 4 dargestellte zweite Ausführungsform einer erfindungsgemäßen Absaugvorrichtung unterscheidet sich von der ersten Ausführungsform der Erfindung nicht in den wesentlichen Merkmalen. Die hier gezeigte Abdeckhaube weist anstatt einer oberen Umlenkrolle, wie sie bei der ersten Ausführungsform vorhanden ist, zwei Umlenkrollen 9''' auf. Dadurch wird unterhalb des vom Saugkanal 1 abgehobenen Abdeckbandes 3 ein größerer Freiraum geschaffen. In diesem großen Freiraum sind nun vier Stutzen 5 mit jeweils einer Zugangsöffnung 8 zu dem Saugkanal 1 vorhanden.

Die gesamte verschiebbar geführte Abdeckhaube 4 kann somit über eine Saugquelle vier verschiedene Saugleitungen speisen. Hierfür ist der Saugkanal 1 mit einem Anschlussstutzen 16 in dem Portal verbunden. Dieser Anschlussstutzen 16 ist mit der Saugquelle verbindbar. Aus der Fig. 4 ist darüber hinaus noch ersichtlich, dass das Abdeckband 3 stirnseitig des Saugkanals 1 über Befestigungseinrichtungen 15, wie beispielsweise Klemmschrauben oder dergleichen, befestigt ist. Die Abdeckhaube 4 randseitig, d.h. längs, über jeweils eine Labyrinthdichtung mit dem Saugkanal 1 abgedichtet ist.

Während des Betriebs der Bearbeitungsmaschine wird über einen hier nicht dargestellten Kreuzschlitten ein Bearbeitungsaggregat zur Bearbeitung des Werkstücks hin- und her verfahren, synchron hierzu wird die Abdeckhaube 4 an dem Portal längs des Saugkanals 1 bewegt. Durch die Zusammenfassung mehrerer Anschlüsse - Stutzen 5 - an einer beweglichen Abdeckhaube 4 ist eine Kollision mehrerer Schläuche ausgeschlossen. Darüber hinaus ist durch die Dichtwirkung der Dichtungskeile 13 in Kombination mit den Umlenkeinrichtungen 9', 9'' eine effektive und einfache Dichtung erzielt. Durch das Bodenblech 7 wird aber der im Saugkanal 1 herrschende Unterdruck nur direkt über die Stutzen 5 weiter in die daran anschließbaren Schläuche geleitet, das Innere der Abdeckhaube 4 bleibt von diesem Unterdruck im Saugkanal 1 unbeeinflusst. Dadurch muss die Abdeckhaube 4 lediglich den sonstigen mechanischen Anforderungen an eine Haube entsprechen, jedoch nicht für die auftretenden Unterdrücke dimensioniert sein, was die Herstellungskosten verringert und auch die Wartungsabstände erhöhen dürfte, da mit weniger Störungen zu rechnen ist.

## Patentansprüche

1. Absaugvorrichtung zum Absaugen von Bearbeitungsrückständen, wie Spänen etc., in einer Bearbeitungsmaschine, mit
- einem Saugkanal (1), der mit einer Saugquelle verbindbar ist und zumindest eine Kanalöffnung (2) aufweist, die durch ein flexibles Abdeckband (3) verschlossen ist, und
- einer Abdeckhaube (4), die
- auf dem Saugkanal (1) entlang der Kanalöffnung (2) verschiebbar ist,
- zumindest einen Sauganschluss (12) besitzt, an den eine Absaugeinrichtung anschließbar ist und der über eine Absaugluftführung (5) mit dem Saugkanal (1) in Strömungsverbindung steht,
- ein die Kanalöffnung (2) abdichtendes Bodenelement (7) umfasst, in dem zumindest eine mit dem Saugkanal (1) in Strömungsverbindung stehende Zugangsöffnung (8) vorhanden ist, an die wiederum die Absaugluftführung (5) angeschlossen ist,
- im Bereich des Bodenelements (7) zumindest zwei voneinander beabstandete Umlenkeinrichtungen (9', 9'') aufweist, mit denen das Abdeckband (3) von der Kanalöffnung (2) abgehoben wird,
**dadurch gekennzeichnet, dass**
- das Abdeckband innerhalb der Abdeckhaube (4) von der Kanalöffnung angehoben wird; und
- Dichtungseinrichtungen (13), die jeweils einen Spalt (17) zur Durchführung des Abdeckbandes (3) zwischen den Umlenkeinrichtungen (9', 9'') und dem Bodenblech (10, 11) abdichten, vorgesehen sind.

2. Absaugvorrichtung nach Anspruch 1, **dadurch gekennzeichnet, dass** die Umlenkeinrichtungen (9', 9'') sich in etwa über die Breite des Abdeckbandes (3) erstrecken.

3. Absaugvorrichtung nach Anspruch 1 oder 2, **dadurch gekennzeichnet, dass** die Umlenkeinrichtungen Rollen (9', 9'') oder Gleitelemente sind.

4. Absaugvorrichtung nach Anspruch 1, **dadurch gekennzeichnet, dass** die Abdeckhaube (4) zu den Längsrändern (21) des Saugkanals (1) hin über eine Labyrinthdichtung abgedichtet ist.

5. Absaugvorrichtung nach Anspruch 1, **dadurch gekennzeichnet, dass** der Saugkanal (1) in einem Portal eines Bearbeitungszentrums verläuft.

6. Absaugvorrichtung nach Anspruch 1 oder 5, **dadurch gekennzeichnet, dass** die Abdeckhaube (4) durch eine zum Verfahren eines Bearbeitungsaggregates dienende Verfahreinrichtung entlang des Saugkanals (1) mitbewegt wird.

7. Absaugvorrichtung nach Anspruch 6, **dadurch gekennzeichnet, dass** es sich bei der Verfahreinrichtung um einen Kreuzschlitten der Bearbeitungsmaschine handelt, der beim Verfahren eines hieran angeordneten Bearbeitungsaggregates die Abdeckhaube (4) mitbewegt.

8. Absaugvorrichtung nach Anspruch 1, **dadurch gekennzeichnet, dass** die Dichteinrichtungen Dichtungskeile (13) sind.

## Claims

1. Suction device for drawing off processing residues, such as shavings etc., in a processing machine, having
- a suction channel (1), which can be connected to a suction source and has at least one channel opening (2), which is closed by a flexible cover band (3), and
- a cover hood (4), which
- can be displaced on the suction channel (1) along the channel opening (2),
- has at least one suction connection (12), to which a suction device can be connected and which is in flow connection with the suction channel (1) via a suction air guide (5),
- comprises a base element (7) sealing the channel opening (2), in which at least one inlet opening (8) in flow connection with the suction channel (1) is present, to which inlet opening (8) in turn the suction air guide (5) is connected,
- in the region of the base element (7) has at least two deflecting devices (9', 9") at a distance from one another, by means of which the cover band (3) is raised from the channel opening (2),
**characterised in that**
- the cover band is raised from the channel opening within the cover hood (4); and
- sealing devices (13), which seal in each case a gap (17) for guiding the cover band (3) between the deflecting devices (9', 9") and the base sheet (10, 11), are provided.

2. Suction device according to claim 1, **characterised in that** the deflecting devices (9', 9") extend approximately over the width of the cover band (3).

3. Suction device according to claim 1 or 2, **characterised in that** the deflecting devices are rollers (9', 9") or gliding elements.

4. Suction device according to claim 1, **characterised in that** the cover hood (4) is sealed towards the longitudinal edges (21) of the suction channel (1) via a labyrinth seal.

5. Suction device according to claim 1, **characterised in that** the suction channel (1) runs in a portal of a processing centre.

6. Suction device according to claim 1 or 5, **characterised in that** the cover hood (4) is also moved along the suction channel (1) by a moving device serving to move a processing unit.

7. Suction device according to claim 6, **characterised in that** the moving device is a cross slide of the processing machine, which also moves the cover hood (4) when moving a processing unit arranged thereon.

8. Suction device according to claim 1, **characterised in that** the sealing devices are sealing wedges (13).

## Revendications

1. Dispositif d'aspiration, pour aspirer des résidus d'usinage, tels que des copeaux, etc., produits dans une machine d'usinage, avec
- un canal d'aspiration (1), qui est susceptible d'être relié à une source d'aspiration ou de vide et présente au moins une ouverture de canal (2), fermée par une bande de recouvrement (3) flexible, et
- un capot de recouvrement (4), qui
- est susceptible d'être déplacé sur le canal d'aspiration (1), le long de l'ouverture de canal (2),
- présente au moins un raccordement d'aspiration (12), auquel peut être raccordé un dispositif d'aspiration et qui est mis en liaison d'écoulement avec le canal d'aspiration (1), par l'intermédiaire d'une conduite d'air d'aspiration (5),
- comprend un élément de fond (7), fermant hermétiquement l'ouverture de canal (2), élément de fond dans lequel est prévue au moins une ouverture d'accès (8), mise en relation d'écoulement avec le canal d'aspiration (1), ouverture d'accès à laquelle est raccordée à son tour la conduite d'air d'aspiration (5), et
- présente, dans la zone de l'élément de fond (7), au moins deux dispositifs de renvoi (9', 9"), espacés l'un de l'autre, à l'aide desquels la bande de recouvrement (3) est soulevée de l'ouverture de canal (2),
**caractérisé en ce que**
- la bande de recouvrement est soulevée de l'ouverture de canal, à l'intérieur du capot de recouvrement (4) ; et
- des dispositifs d'étanchéité (13), qui ferment hermétiquement chacun une fente (17) pour permettre le passage de la bande de recouvrement (3), entre les dispositifs de renvoi (9', 9") et la tôle de fond (10, 11), sont prévus.

2. Dispositif d'aspiration selon la revendication 1, **caractérisé en ce que** les dispositifs de renvoi (9', 9") s'étendent à peu près sur la largeur de la bande de recouvrement (3).

3. Dispositif d'aspiration selon la revendication 1 ou 2, **caractérisé en ce que** les dispositifs de renvoi sont des rouleaux (9', 9") ou des éléments de glissement.

4. Dispositif d'aspiration selon la revendication 1, **caractérisé en ce que** le capot de recouvrement (4) est fermé hermétiquement par rapport aux bords longitudinaux (21) du canal d'aspiration (1), par l'intermédiaire d'un joint d'étanchéité de type à labyrinthe.

5. Dispositif d'aspiration selon la revendication 1, **caractérisé en ce que** le canal d'aspiration (1) s'étend dans un portique d'un centre d'usinage.

6. Dispositif d'aspiration selon la revendication 1 ou 5, **caractérisé en ce que** le capot de recouvrement (4) est entraîné le long du canal d'aspiration (1), au moyen d'un dispositif de déplacement servant au déplacement d'un groupe d'usinage.

7. Dispositif d'aspiration selon la revendication 6, **caractérisé en ce qu'**il s'agit, concernant le dispositif de déplacement, d'un chariot à mouvements croisés appartenant à la machine d'usinage, qui, lors du déplacement d'un groupe d'usinage disposé sur lui, entraîne avec lui le capot de recouvrement (4).

8. Dispositif d'aspiration selon la revendication 1, **caractérisé en ce que** les dispositifs d'étanchéité sont des coins d'étanchéité (13).
